# FASCICULE DE BREVET EUROPEEN

(11) **EP 4 073 921 B1**
(45) Date de publication et mention de la délivrance du brevet: **31.01.2024**
(21) Numéro de dépôt: 20803174.0
(22) Date de dépôt: 12.11.2020
(51) Int. Cl.: H02P 3/22, H02P 6/24

(54) **PROCÉDÉ DE COMMANDE D'UN MOTEUR ÉLECTRIQUE À COURANT CONTINU SANS BALAI**
VERFAHREN ZUR STEUERUNG EINES BÜRSTENLOSEN GLEICHSTROMELEKTROMOTORS
METHOD FOR CONTROLLING A BRUSHLESS DIRECT CURRENT ELECTRIC MOTOR

(30) Priorité: 13.12.2019 FR 1914330
(43) Date de publication de la demande: 19.10.2022
(73) Titulaire: Valeo Systèmes d'Essuyage, 78322 le Mesnil Saint Denis (FR)
(72) Inventeur: LIU, Xiang, 78322 LE MESNIL SAINT DENIS (FR); HERRADA, Jose-Luis, 78322 LE MESNIL SAINT DENIS (FR); PASCHUTINE, Alexandre, 78322 LE MESNIL SAINT DENIS (FR); BELHAJ, Mehdi, 78322 LE MESNIL SAINT DENIS (FR)
(74) Mandataire: Valeo Visibility
(86) Numéro de dépôt international: PCT/EP2020/081836
(87) Numéro de publication internationale: WO 2021/115717

(56) Documents cités:
- EP-A1- 3 257 352
- FR-A1- 2 736 222
- FR-A1- 3 056 360
- US-A1- 2018 026 558
- US-B1- 6 274 992

## Description

La présente invention concerne le domaine des moteurs électriques pour équipements de véhicules automobiles et notamment les moteurs électriques à courant continu sans balai utilisés pour les dispositifs d'essuyage.

La commande des moteurs à courant continu sans balai nécessite de connaître la position du rotor au moins à certains points précis pour pouvoir appliquer une commande par modulation à largeur d'impulsions permettant d'obtenir la vitesse de rotation désirée.

Pour cela il est connu d'utiliser des capteurs de position et notamment des capteurs à effet Hall permettant de connaître certaines positions du rotor.

Cependant, afin de réduire le coût du moteur électrique, il peut être intéressant de se passer de ces capteurs de position dont le coût est non négligeable.

Il est également possible de déterminer la position du rotor par une méthode de croisement du zéro (« zero-crossing » en anglais) en mesurant les forces électromotrices au niveau des phases du moteur électrique. Cependant, il est nécessaire que le moteur électrique tourne à une vitesse supérieure à une vitesse de rotation prédéfinie pour que les forces électromotrices soient assez élevés pour permettre leur détection.

Il est ainsi possible de piloter le moteur électrique sans capteur en appliquant une commande prédéterminée au démarrage jusqu'à obtenir la vitesse de rotation prédéfinie.

Cependant, dans le cas d'un dispositif d'essuyage, il est également nécessaire de stopper le moteur dans une position prédéterminée correspondant à une position d'arrêt (« park position » en anglais). Cette position d'arrêt est généralement fournie par l'intermédiaire d'un capteur associé à la tringlerie du dispositif d'essuyage. Ainsi, un moyen d'arrêter le moteur électrique est de court-circuiter les branches de l'onduleur alimentant les phases du moteur lorsque la position d'arrêt est atteinte afin de stopper net le moteur électrique. Or, un tel court-circuit des branches de l'onduleur lorsque le moteur électrique tourne à sa vitesse nominale produit des pics de courant importants pouvant endommager les transistors utilisés dans l'onduleur et ainsi conduire à une panne du moteur électrique. Un moyen de surmonter ce problème est de surdimensionner les transistors pour pouvoir résister à ces pics de courant mais cela implique un coût important qui va à l'encontre de la recherche de réduction du coût global du moteur électrique. Un tel état de la technique est connu des documents FR2736222 et FR3056360. L'enseignement de ces documents correspond au préambule des revendications indépendantes 1 et 6.

Il convient donc de trouver une solution permettant de commander un moteur électrique sans balai et sans capteur tout en permettant l'arrêt du moteur électrique dans une position prédéterminée et sans détériorer les transistors utilisés pour l'alimentation du moteur électrique.

A cet effet, il est proposé un procédé de commande d'un moteur électrique à courant continu sans balai et sans capteur pour équipement de véhicule automobile dans lequel le moteur électrique comporte un rotor et des phases alimentées par une modulation à largeur d'impulsions appliquée au niveau d'un onduleur du moteur électrique et dans lequel, au-delà d'un seuil minimal de la vitesse de rotation du rotor, la position du rotor est déterminée à partir d'une mesure de forces électromotrices au niveau des phases du moteur électrique ,
caractérisé en ce qu'en cas d'une commande d'arrêt du moteur électrique, la vitesse de rotation du moteur électrique est réduite depuis une vitesse nominale jusqu'à une deuxième vitesse de rotation prédéterminée comprise dans un intervalle entre la première vitesse de rotation prédéterminée et 10 % au-dessus de ladite première vitesse de rotation prédéterminée en modifiant la modulation à largeur d'impulsions puis le moteur est arrêté dans une position prédéterminée en court-circuitant les branches de l'onduleur lorsque la position prédéterminée est atteinte.

L'utilisation d'un procédé de commande d'un moteur électrique sans balai et sans capteur dans lequel, lors d'un arrêt du moteur électrique, la vitesse est réduite à une vitesse de rotation sensiblement égale à la vitesse minimale pour laquelle les forces électromotrices au niveau des phases du moteur peuvent être mesurées pour détecter la position du rotor puis de court-circuiter les branches de l'onduleur pour stopper le moteur lorsque la position d'arrêt désirée est atteinte, ce qui permet de réduire l'intensité des pics de courant générés lors du court-circuit des branches de l'onduleur. Cela permet avantageusement d'arrêter le moteur électrique dans la position voulue sans endommager les transistors utilisés pour l'alimentation du moteur électrique.

Selon un mode de mise en oeuvre, la réduction de la vitesse de rotation jusqu'à la vitesse de rotation prédéterminée comprend une pluralité de paliers associés à différentes réductions de la vitesse de rotation du moteur électrique.

Selon un autre mode de de mise en oeuvre, le moteur électrique est associé à un dispositif réducteur pour former un moto-réducteur configuré pour entraîner un dispositif d'essuyage de véhicule automobile comprenant au moins un bras d'essuyage. Ledit dispositif d'essuyage comprend un capteur d'arrêt associé à une position d'arrêt du bras d'essuyage. La position prédéterminée est donnée par le capteur d'arrêt et un signal du capteur d'arrêt est utilisé pour déterminer l'instant à partir duquel la vitesse de rotation doit être réduite.

Selon un autre mode de de mise en oeuvre, le capteur d'arrêt est modifié pour fournir une position de ralentissement à partir de laquelle la vitesse de rotation du moteur électrique doit être réduite pour permettre l'arrêt du dispositif d'essuyage au niveau de la position d'arrêt, par exemple 5° ou 10° avant la position d'arrêt.

Selon un autre mode de de mise en oeuvre, la position du bras d'essuyage est déduite à partir de la position du rotor déterminé par les forces électromotrices et du rapport de réduction du réducteur lorsque la vitesse de rotation du moteur électrique est supérieure au seuil minimal.

La présente invention concerne également un moto-réducteur pour dispositif d'essuyage de véhicule automobile comprenant un moteur électrique à courant continu sans balai et sans capteur dans lequel le moteur électrique comprend un rotor, une unité de commande, et des phases alimentées par une modulation à largeur d'impulsions appliquée au niveau d'un onduleur du moteur électrique. L'unité de commande est configurée pour déterminer la position du rotor à partir d'une mesure de forces électromotrices au niveau des phases du moteur électrique au-delà d'un seuil minimal de la vitesse de rotation du rotor.

En cas d'une commande d'arrêt du moteur électrique, l'unité de commande est configurée pour réduire la vitesse de rotation du moteur électrique depuis une vitesse nominale jusqu'à une vitesse de rotation prédéterminée comprise dans un intervalle entre ledit seuil minimal et 10 % au-dessus dudit seuil minimal en modifiant la modulation à largeur d'impulsions puis pour arrêter le moteur électrique dans une position prédéterminée en court-circuitant les branches de l'onduleur lorsque la position prédéterminée est atteinte.

Selon un mode de réalisation, la position prédéterminée est donnée par un capteur d'arrêt associé à une position d'arrêt du dispositif d'essuyage, l'unité de commande étant configurée pour utiliser un signal de sortie dudit capteur d'arrêt de façon à déterminer l'instant à partir duquel la vitesse de rotation du rotor doit être réduite.

Selon un autre mode de réalisation, le capteur d'arrêt est modifié pour fournir une position de ralentissement à partir de laquelle la vitesse de rotation du moteur électrique doit être réduite pour permettre l'arrêt du dispositif d'essuyage au niveau de la position d'arrêt.

La présente invention concerne également un dispositif d'essuyage, notamment pour véhicule automobile, comprenant un moto-réducteur tel que décrit précédemment.

D'autres caractéristiques et avantages de l'invention apparaîtront plus clairement à la lecture de la description suivante, donnée à titre d'exemple illustratif et non limitatif et des dessins annexés parmi lesquels :
[Fig.1] représente une vue schématique d'un moteur électrique et de son onduleur de commande;
[Fig.2] représente une vue schématique en perspective d'une partie d'un dispositif d'essuyage;
[Fig.3] représente une schématique d'une partie d'un capteur d'arrêt;
[Fig.4] représente une vue schématique d'une roue équipée d'une piste métallique d'un capteur d'arrêt;
[Fig.5] représente un organigramme des étapes du procédé de commande d'un moteur électrique;

Dans ces figures, les éléments identiques portent les mêmes références.

Les réalisations suivantes sont des exemples. Bien que la description se réfère à un ou plusieurs modes de réalisation, ceci ne signifie pas nécessairement que chaque référence concerne le même mode de réalisation ou que les caractéristiques s'appliquent seulement à un seul mode de réalisation. De simples caractéristiques de différents modes de réalisation peuvent également être combinées ou interchangées pour fournir d'autres réalisations.

La présente invention concerne un procédé de commande d'un moteur électrique pour un dispositif d'essuyage de véhicule automobile.

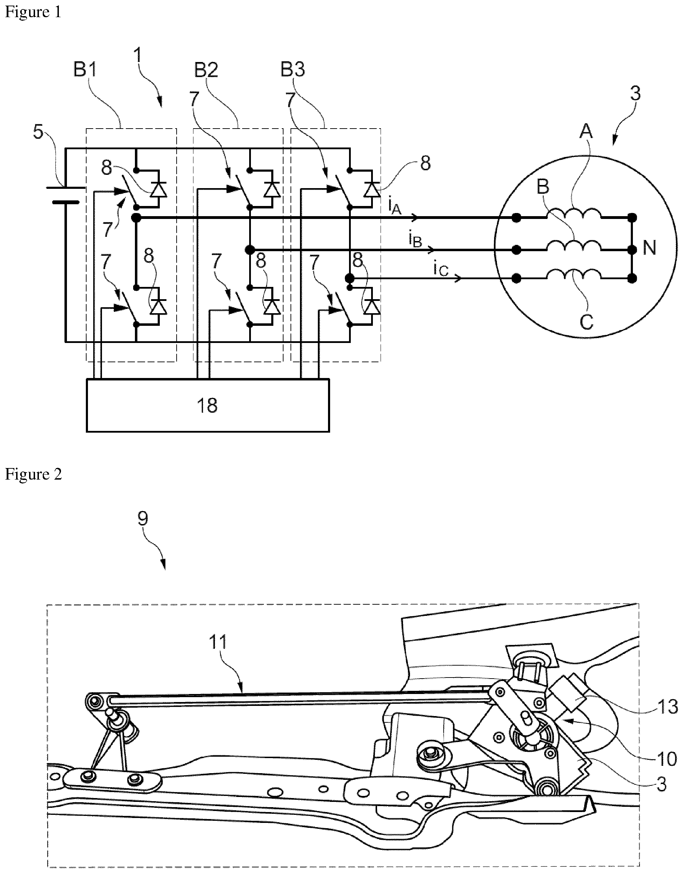

La figure 1 représente un schéma électrique d'un onduleur d'alimentation 1 d'un moteur électrique triphasé 3, notamment un moteur électrique 3 pour un dispositif d'essuyage de véhicule automobile. L'onduleur 1 comprend trois branches notées B1, B2 et B3 configurées pour alimenter respectivement les trois phases A, B et C du moteur électrique 3, chacune des branches B1, B2, B3 étant reliées d'une part à une borne positive d'une source d'alimentation 5 telle qu'une batterie du véhicule, et d'autre part à la masse correspondant à la borne négative de la source d'alimentation 5. Chaque branche B1, B2, B3 comprend deux interrupteurs 7, généralement réalisés par un transistor, montés en série. Une diode 8 est généralement disposée en parallèle de chaque transistor 7. Le point milieu entre les deux transistors 7 des branches respectives B1, B2, B3 est relié à une phase respective A, B, C du moteur électrique 3.

Afin de commander le moteur électrique 3 en rotation, une commande par modulation à largeur d'impulsions est appliquée sur les phases A, B, C du moteur électrique 3. L'application de cette commande est réalisée en commandant l'ouverture et la fermeture des transistors 7 via une unité de commande 18. En fonctionnement normal, les deux interrupteurs 7 d'une branche B1, B2, B3 sont dans un état opposé (l'un est ouvert tandis que l'autre est fermé). De plus, il y a toujours une phase A, B ou C qui n'est pas alimentée (interrupteur 7 reliée à la borne positive de la source d'alimentation en position ouverte).

Le moteur électrique 3 comporte un rotor, Lorsque le rotor tourne suffisamment vite, c'est-à-dire à une vitesse supérieure à un seuil minimal Sₘᵢₙ de la vitesse de rotation du rotor, il est possible de mesurer la force électromotrice au niveau de la phase A, B ou C qui n'est pas alimentée et de déduire la position du rotor du moteur électrique 3 en détectant un moment où la tension mesurée passe à zéro appelée technique « zero crossing » en anglais.

La commande par modulation à largeur d'impulsions est par exemple appliquée par une unité de commande 18 du moteur électrique 3. De plus, lors du démarrage du moteur électrique 3, il est possible d'appliquer une séquence de commandes prédéterminée permettant d'atteindre la vitesse de rotation Sₘᵢₙ sans avoir besoin de connaître la position du rotor et donc sans utiliser de capteur de position. De la même manière, il est possible d'appliquer une autre séquence de commandes prédéterminée pour obtenir l'arrêt du moteur sans nécessiter de capteur de position mais un tel procédé ne permet pas d'arrêter le moteur électrique 3 dans la position d'arrêt désirée.

La figure 2 représente un schéma d'un dispositif d'essuyage 9 pour véhicule automobile. Le dispositif d'essuyage 9 comprend un moteur électrique 3 commandé par un onduleur 1 tel que présenté sur la figure 1. Un mécanisme réducteur (non visible) est disposé à la sortie du moteur électrique 3 pour former un moto-réducteur 10. Le rapport de réduction du réducteur est par exemple de 1/69°. La sortie du réducteur est reliée à une tringlerie 11 permettant la liaison mécanique entre la sortie du réducteur et le ou les bras d'essuyage (non représenté) du dispositif d'essuyage 9. La tringlerie 11 comprend par exemple un ensemble de bielles et de manivelles permettant de convertir le mouvement de rotation du moteur électrique 3 en un mouvement de va-et-vient du(es) bras d'essuyage. Afin d'assurer l'arrêt des bras d'essuyage dans une position d'arrêt prédéfinie, un capteur d'arrêt 13 aussi appelé « park finger » en anglais, est disposé au niveau du dispositif d'essuyage 11, par exemple au niveau de la tringlerie 11 ou à la sortie du réducteur.

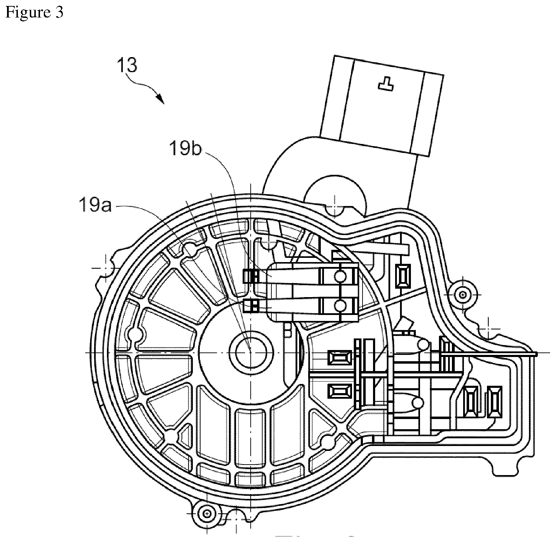

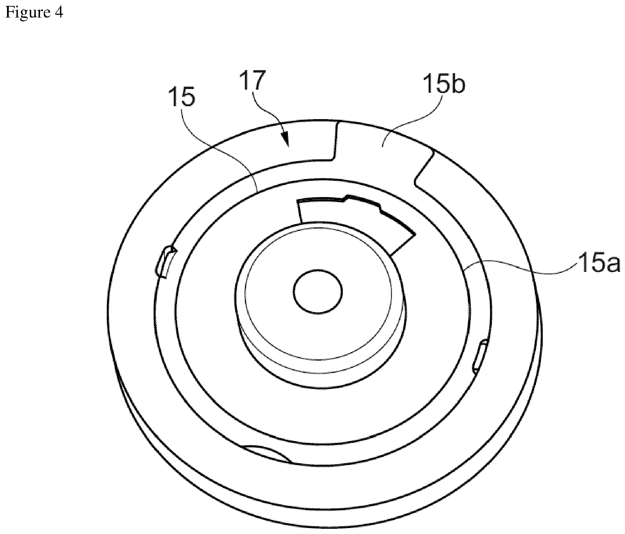

Les figures 3 et 4 représentent un exemple de réalisation d'un tel capteur d'arrêt 13. Le capteur 13 comprend une piste métallique 15, et donc électriquement conductrice ayant par exemple une résistance inférieure à 10m ohm. La piste métallique 15 est disposée sur une roue 17 qui est réalisée dans un matériau non conducteur, par exemple en plastique. La piste métallique 15 comprend une portion circulaire 15a à partir de laquelle s'étend vers l'extérieur un appendice 15b sur une portion angulaire réduite. Le capteur 13 comprend également deux contacts 19a et 19b, réalisés par exemple par deux lames métalliques, configurés pour venir en contact avec la piste métallique 15. Le premier contact 19a est configuré pour venir en contact avec la portion circulaire 15a de piste métallique 15 et être en permanence en contact avec la piste métallique 15 tandis que le deuxième contact 19b est configuré pour venir en contact avec l'appendice 15b de sorte que le deuxième contact est en contact avec la piste métallique 15 seulement dans la portion angulaire réduite correspondant à l'appendice 15b et en contact avec la roue 17 non conductrice le reste du temps.

Ainsi, en mesurant la résistance électrique entre les deux contacts 19a et 19b, il est possible de détecter les moments où l'appendice 15b de la piste métallique 15 est en contact avec le deuxième contact 19b puisque la résistance entre les deux contacts 19a et 19b devient sensiblement nulle du fait du caractère conducteur de la piste métallique 15. La roue 17 est ainsi configurée pour que la zone angulaire associée à l'appendice 15b corresponde à la position d'arrêt. Il est néanmoins possible de modifier la configuration de la roue (et notamment de la piste métallique 15) pour que la position de l'appendice 15b corresponde à une position différente de la position d'arrêt, par exemple 5° ou 10° avant la position d'arrêt.

Selon un premier mode de réalisation, afin de limiter l'intensité de ces pics de courant lors d'un arrêt du moteur électrique 3, le capteur d'arrêt 13 est modifié de manière à ce que l'appendice corresponde à une position de ralentissement située avant la position d'arrêt, par exemple 5° ou 10° avant la position d'arrêt. De plus, en fonctionnement et lors de l'arrêt du dispositif d'essuyage 11, lorsque la position de ralentissement est atteinte et détectée via le capteur d'arrêt 13, l'unité de commande 18 est configurée pour réduire la vitesse de rotation du moteur électrique 3. L'unité de commande 18 est donc configurée pour recevoir et utiliser un signal de sortie du capteur d'arrêt 13. La vitesse de rotation du moteur électrique 3 est réduite jusqu'à une vitesse de rotation prédéterminée V₁ correspondant au seuil minimal Sₘᵢₙ pour lequel la position du rotor peut être déterminée à partir des forces électromotrices mesurées au niveau des phases A, B, C ou une vitesse légèrement supérieure à ce seuil minimal Sₘᵢₙ. La vitesse de rotation prédéterminée V₁ est par exemple comprise dans un intervalle entre le seuil minimal Sₘᵢₙ et une vitesse de rotation 10 % supérieure au seuil minimal Sₘᵢₙ.

Ainsi, lors de l'arrêt du moteur électrique 3, la vitesse est d'abord réduite pour passer d'une vitesse nominale de fonctionnement (il existe généralement plusieurs vitesses nominales) à une vitesse proche du seuil minimal Sₘᵢₙ. La réduction depuis la vitesse nominale jusqu'à la vitesse de rotation prédéterminée V₁ peut être réalisée de manière sensiblement linéaire ou par paliers en passant par différentes vitesses intermédiaires pour différentes positions prédéterminées pour atteindre la vitesse prédéterminée V₁ juste avant d'atteindre la position d'arrêt. En particulier, la configuration des paliers peut être différente suivant la vitesse nominale au moment où la commande de l'arrêt du moteur électrique 3 est transmise.

L'unité de commande 18 est configurée pour arrêter le rotor du moteur électrique 3 par un court-circuitage des branches B1, B2, B3 de l'onduleur 1 lorsque la position d'arrêt est atteinte. Cette position d'arrêt est déterminée à partir des forces électromotrices mesurées au niveau des phases du moteur électrique 3 et du rapport de réduction du réducteur.

En effet, les forces électromotrices permettent de déterminer la position du rotor (ce qui est possible car la vitesse de rotation prédéterminée est supérieure au seuil minimal Sₘᵢₙ) et le rapport de réduction permet de déduire la position du(es) bras d'essuyage à partir de la position du rotor.

Ainsi, le court-circuitage des branches de l'onduleur 1 lorsque la position d'arrêt est atteinte entraîne des pics de courant peu intenses du fait de la vitesse de rotation réduite (par rapport à une vitesse nominale de rotation du moteur électrique 3).

Selon un deuxième mode de réalisation, le capteur d'arrêt 13 n'est pas modifié et indique la position d'arrêt. La première position prédéterminée est alors déterminée à partir de la position du rotor estimée à partir des forces électromotrices et du rapport de réduction du réducteur.

En effet, comme indiqué précédemment, la position du(es) bras d'essuyage peut être estimée à partir de la position du rotor déterminée à partir des forces électromotrices lorsque la vitesse de rotation du moteur électrique est suffisante, autrement dit supérieure audit seuil minimal Sₘᵢₙ.

Cependant, la détermination de la position du rotor étant une mesure de positon relative, il est nécessaire d'utiliser le capteur d'arrêt 13 pour avoir un repère de position. Tous les types de control sans capteur (« sensorless » en langue anglaise), par exemple la mesure des forces électromotrices, permettent d'estimer la position du bras d'essuyage entre deux positions d'arrêt du(es) bras d'essuyage. Cela permet notamment de déterminer la position du bras juste avant qu'il atteigne la position d'arrêt, par exemple pour atteindre la première position prédéterminée située 5° avant la position d'arrêt. La vitesse est alors réduite jusqu'à la vitesse de rotation prédéterminée V₁ lorsque la position estimée correspond à la première position prédéterminée. Puis, lorsque la position d'arrêt, donnée par la capteur d'arrêt 13, est atteinte (à la vitesse V₁) les branches B1, B2, B3 de l'onduleur 1 sont court-circuitées pour arrêter le moteur électrique 3 dans cette position d'arrêt. Comme pour le mode de réalisation précédent, les pics de courant générés au niveau des transistors 7 de l'onduleur 1 sont réduits (par rapport aux pics générés lorsque le court-circuit est réalisé lorsque le moteur électrique 13 tourne à une vitesse nominale).

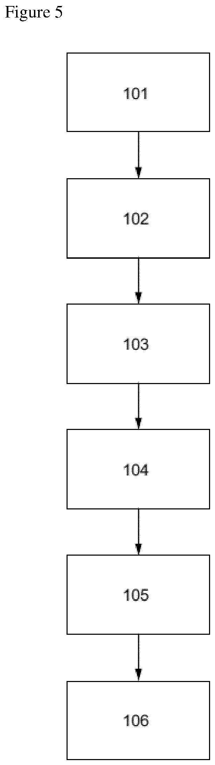

Les différentes étapes du procédé de commande d'un moteur électrique 3 d'un dispositif d'essuyage tel que décrit précédemment vont maintenant être décrite à partir de la figure 5. La présente invention concerne plus spécifiquement la commande du moteur électrique 3 lors de son arrêt mais les étapes associées au démarrage et au fonctionnement nominal du moteur électrique 3 vont également être décrites.

La première étape 101 concerne l'activation du dispositif d'essuyage 11. Cette activation correspond par exemple à l'actionnement d'une commande manuelle par un utilisateur du véhicule qui provoque l'envoi d'un signal d'activation à l'unité de commande 18.

La deuxième étape 102 concerne le démarrage du moteur électrique 3. Suite à la réception d'une commande d'actionnement, l'unité de commande 18 du moteur électrique 3 applique une séquence de commandes prédéterminée d'une modulation à largeur d'impulsions au niveau de l'onduleur 1. Cette étape peut se faire avec ou sans connaissance de la position du rotor du moteur électrique 3.

La troisième étape 103 concerne la stabilisation de la vitesse de rotation du moteur électrique 3 à une vitesse nominale. Cette vitesse nominale est supérieure au seuil minimal Sₘᵢₙ de sorte que la commande de modulation à largeur d'impulsions pour obtenir cette vitesse nominale est réalisée grâce à la position du rotor déterminée à partir des forces électromotrices mesurées au niveau des branches de l'onduleur 1. Le dispositif d'essuyage 1 peut comprendre plusieurs vitesses nominales, généralement deux, de sorte que l'utilisateur peut changer de vitesse nominale au cours du temps en fonction des besoins. La régulation du moteur électrique 3 se fait dans tous les cas à l'aide des forces électromotrices mesurées au niveau des branches B1, B2, B3 de l'onduleur 1.

La quatrième étape 104 concerne une commande de l'arrêt du dispositif d'essuyage 1. Cette commande correspond par exemple à une commande manuelle de l'utilisateur qui provoque l'envoi d'un signal d'arrêt à l'unité de commande 18.

La cinquième étape 105 concerne une réduction de la vitesse de rotation du moteur électrique 3 jusqu'à la vitesse de rotation prédéterminée. Cette réduction est réalisée lorsque le dispositif d'essuyage 1 est dans une position prédéterminée, par exemple 5° avant la position d'arrêt.

Selon un premier mode de mise en oeuvre, cette position est donnée par le capteur d'arrêt 13 modifié pour détecter cette position prédéterminée, autrement dit la position de ralentissement.

Selon un deuxième mode de mise en oeuvre, cette position est déterminée à partir de la position estimée du rotor grâce aux forces électromotrices mesurées au niveau des branches B1, B2, B3 de l'onduleur 1, du rapport de réduction du réducteur et du signal précédent du capteur d'arrêt 13.

La réduction de la vitesse de rotation peut être linéaire ou par paliers (une première réduction de vitesse est appliquée entre les positions -15° et -10° (avant la position d'arrêt qui correspond à une position de référence 0°) puis une deuxième réduction de vitesse est appliquée entre les positions-10° et -5°. Une réduction non linéaire peut également être appliquée.

La sixième étape 106 concerne un arrêt du moteur électrique 3 dans la position d'arrêt par le court-circuitage des branches B1, B2, B3 de l'onduleur 1 lorsque la position d'arrêt est atteinte.

Selon le premier mode de mise en oeuvre, l'atteinte de la position d'arrêt est déterminée à partir de la position estimée du rotor grâce aux forces électromotrices mesurées au niveau des branches B1, B2, B3 de l'onduleur 1, du rapport de réduction du réducteur et du signal précédent du capteur d'arrêt 13 correspondant à la position 5°.

Selon le deuxième mode de réalisation, la position d'arrêt est donnée par le capteur d'arrêt 13. Le court-circuitage des branches B1, B2, B3 de l'onduleur 1 entraîne un arrêt très rapide du moteur électrique 3 correspondant donc à un arrêt du dispositif d'essuyage 11 dans la position d'arrêt. De plus, du fait de la vitesse réduite avant le court-circuitage, les pics de courant générés dans les transistors 7 de l'onduleur 1 sont réduits ce qui permet d'éviter l'utilisation de transistors 7 surdimensionnés et ainsi limiter le coût de l'onduleur 1.

Ainsi, la gestion de l'arrêt du moteur électrique 3 du dispositif d'essuyage 11 telle que décrite précédemment permet l'utilisation d'un moteur électrique 3 à courant continu sans balai et sans capteur dans un tel dispositif tout en utilisant des transistors 7 de capacité limitée et donc ayant un coût limité. Le coût global du dispositif d'essuyage 11 peut ainsi être réduit tout en conservant la même qualité de fonctionnement pour l'utilisateur (arrêt du bras d'essuyage dans la position d'arrêt).

## Revendications

1. Procédé de commande d'un moteur électrique (3) à courant continu sans balai et sans capteur pour équipement de véhicule automobile dans lequel le moteur électrique (3) comporte un rotor et des phases (A, B, C) alimentées par une modulation à largeur d'impulsions appliquée au niveau d'un onduleur (1) d'alimentation du moteur électrique (3), et dans lequel, au-delà d'un seuil minimal (Sₘᵢₙ) de la vitesse de rotation du rotor, la position du rotor est déterminée à partir d'une mesure de forces électromotrices au niveau des phases (A, B, C) du moteur électrique (3),
**caractérisé en ce qu'**en cas d'une commande d'arrêt (104) du moteur électrique (3), la vitesse de rotation du rotor est réduite (105) depuis une vitesse nominale jusqu'à une vitesse de rotation prédéterminée (V₁) comprise dans un intervalle entre le seuil minimal (Sₘᵢₙ) et 10 % au-dessus dudit seuil minimal (Sₘᵢₙ) en modifiant la modulation à largeur d'impulsions puis le moteur électrique (3) est arrêté (106) dans une position prédéterminée en court-circuitant les branches (A, B, C) de l'onduleur (1) lorsque la position prédéterminée est atteinte.

2. Procédé de commande selon la revendication 1, dans lequel la réduction (104) de la vitesse de rotation du rotor jusqu'à la vitesse de rotation prédéterminée (V₁) comprend une pluralité de paliers associés à différentes réductions de la vitesse de rotation du moteur électrique (3).

3. Procédé de commande selon la revendication 1 ou 2, dans lequel le moteur électrique (3) est associé à un dispositif réducteur pour former un moto-réducteur (10) configuré pour entraîner un dispositif d'essuyage (11) de véhicule automobile comprenant au moins un bras d'essuyage, ledit dispositif d'essuyage (11) comprenant un capteur d'arrêt (13) associé à une position d'arrêt du bras d'essuyage, et dans lequel la position prédéterminée est donnée par le capteur d'arrêt (13) et un signal de sortie du capteur d'arrêt (13) est utilisé pour déterminer l'instant à partir duquel la vitesse de rotation du rotor doit être réduite.

4. Procédé de commande selon la revendication 3, dans lequel le capteur d'arrêt (13) est modifié pour fournir une position de ralentissement à partir de laquelle la vitesse de rotation du moteur électrique (3) doit être réduite pour permettre l'arrêt du dispositif d'essuyage (11) au niveau de la position d'arrêt, par exemple 5° ou 10° avant la position d'arrêt.

5. Procédé de commande selon la revendication 3 ou 4, dans lequel la position du bras d'essuyage est déduite à partir de la position du rotor déterminé par les forces électromotrices et du rapport de réduction du réducteur lorsque la vitesse de rotation du rotor est supérieure au seuil minimal (Sₘᵢₙ).

6. Moto-réducteur (10) pour entraîner un dispositif d'essuyage (11) de véhicule automobile comprenant un dispositif réducteur et un moteur électrique (3) à courant continu sans balai et sans capteur, dans lequel le moteur électrique (3) comprend un rotor, une unité de commande (18) et des phases (A, B, C) alimentées par une modulation à largeur d'impulsions appliquée au niveau d'un onduleur (1) du moteur électrique (3), et dans lequel l'unité de commande (18) est configurée pour déterminer la position du rotor à partir d'une mesure de forces électromotrices au niveau des phases (A, B, C) du moteur électrique (3) au-delà d'un seuil minimal (Sₘᵢₙ) de la vitesse de rotation du rotor, **caractérisé en ce qu'**en cas d'une commande d'arrêt du moteur électrique (3), l'unité de commande (18) est configurée pour réduire la vitesse de rotation du rotor depuis une vitesse nominale jusqu'à une vitesse de rotation prédéterminée (V₁) comprise dans un intervalle entre le seuil minimal (Sₘᵢₙ) et 10 % au-dessus dudit seuil minimal (Sₘᵢₙ) en modifiant la modulation à largeur d'impulsions puis pour arrêter le moteur électrique (3) dans une position prédéterminée en court-circuitant les branches (B1, B2, B3) de l'onduleur (1) lorsque la position prédéterminée est atteinte.

7. Moto-réducteur (10) selon la revendication 6, dans lequel la position prédéterminée est donnée par un capteur d'arrêt (13) associé à une position d'arrêt du dispositif d'essuyage (11), l'unité de commande (18) étant configurée pour utiliser un signal de sortie dudit capteur d'arrêt (13) de façon à déterminer l'instant à partir duquel la vitesse de rotation du rotor doit être réduite.

8. Moto-réducteur (10) selon la revendication 7, dans lequel le capteur d'arrêt (13) est modifié pour fournir une position de ralentissement à partir de laquelle la vitesse de rotation du moteur électrique (3) doit être réduite pour permettre l'arrêt du dispositif d'essuyage (11) au niveau de la position d'arrêt.

9. Moto-réducteur (10) selon la revendication 7 ou 8, dans lequel l'unité de commande (18) est configurée pour déduire la position du bras d'essuyage à partir de la position du rotor déterminé par les forces électromotrices et du rapport de réduction du dispositif réducteur lorsque la vitesse de rotation du rotor est supérieure au seuil minimal (Sₘᵢₙ).

10. Dispositif d'essuyage (11), notamment pour véhicule automobile, comprenant un moto-réducteur (10) selon l'une des revendications 6 à 9.

## Patentansprüche

1. Verfahren zur Steuerung eines bürstenlosen und sensorlosen Gleichstromelektromotors (3) zur Ausrüstung eines Kraftfahrzeugs, bei dem der Elektromotor (3) einen Rotor und Phasen (A, B, C) aufweist, die mit einer Pulsweitenmodulation versorgt werden, die an einem Wechselrichter (1) zur Versorgung des Elektromotors (3) angewandt wird, und bei dem, jenseits eines Mindestschwellenwerts (Sₘᵢₙ) der Drehzahl des Rotors, die Position des Rotors anhand einer Messung von elektromotorischen Kräften an Phasen (A, B, C) des Elektromotors (3) bestimmt wird,
**dadurch gekennzeichnet, dass** im Fall eines Stoppbefehls (104) zum Stoppen des Elektromotors (3) die Drehzahl des Rotors (105) von einer Nenngeschwindigkeit bis auf eine vorbestimmte Drehzahl (V₁) reduziert wird, die in einem Intervall zwischen dem Mindestschwellenwert (Sₘᵢₙ) und 10 % über dem Mindestschwellenwert (Sₘᵢₙ) liegt, indem die Pulsweitenmodulation geändert wird, dann der Elektromotor (3) in einer vorbestimmten Position gestoppt wird (106), indem die Zweige (A, B, C) des Wechselrichters (1) kurzgeschlossen werden, wenn die vorbestimmte Position erreicht ist.

2. Verfahren zur Steuerung nach Anspruch 1, bei dem die Reduzierung (104) der Drehzahl des Rotors bis auf die vorbestimmte Drehzahl (V₁) eine Mehrzahl von Stufen umfasst, die verschiedenen Reduzierungen der Drehzahl des Elektromotors (2) zugeordnet sind.

3. Verfahren zur Steuerung nach Anspruch 1 oder 2, bei dem der Elektromotor (3) einer Getriebevorrichtung zugeordnet ist, um einen Getriebemotor (10) zu bilden, der dazu ausgestaltet ist, eine Wischervorrichtung (11) eines Kraftfahrzeugs anzutreiben, die mindestens einen Wischerarm umfasst, wobei die Wischervorrichtung (11) einen Stoppsensor (13) umfasst, der einer Stoppposition des Wischerarms zugeordnet ist, und bei dem die vorbestimmte Position von dem Stoppsensor (13) gegeben wird und ein Ausgangssignal des Stoppsensors (13) verwendet wird, um den Zeitpunkt zu bestimmen, von dem an die Drehzahl des Rotors reduziert werden muss.

4. Verfahren zur Steuerung nach Anspruch 3, bei dem der Stoppsensor (13) geändert wird, um eine Verzögerungsposition auszugeben, von der an die Drehzahl des Elektromotors (3) reduziert werden muss, um das Stoppen der Wischervorrichtung (11) an der Stoppposition zu ermöglichen, zum Beispiel 5° oder 10° vor der Stoppposition.

5. Verfahren zur Steuerung nach Anspruch 3 oder 4, bei dem die Position des Wischerarms aus der Position des Rotors, die durch die elektromotorischen Kräfte bestimmt wird, und dem Untersetzungsverhältnis des Getriebes hergeleitet wird, wenn die Drehzahl des Rotors größer als ein Mindestschwellenwert (Sₘᵢₙ) ist.

6. Getriebemotor (10) zum Antreiben einer Wischervorrichtung (11) eines Kraftfahrzeugs, umfassend eine Getriebevorrichtung und einen bürstenlosen und sensorlosen Gleichstromelektromotor (3), wobei der Elektromotor (3) einen Rotor, eine Steuerungseinheit (18) und Phasen (A, B, C) umfasst, die mit einer Pulsweitenmodulation versorgt werden, die an einem Wechselrichter (1) des Elektromotors (3) angewandt wird, und wobei die Steuerungseinheit (18) dazu ausgestaltet ist, die Position des Rotors anhand einer Messung von elektromotorischen Kräften an Phasen (A, B, C) des Elektromotors (3) jenseits eines Mindestschwellenwerts (Sₘᵢₙ) der Drehzahl des Rotors zu bestimmen, **dadurch gekennzeichnet, dass** im Fall eines Stoppbefehls zum Stoppen des Elektromotors (3) die Steuerungseinheit (18) dazu ausgestaltet ist, die Drehzahl des Rotors von einer Nenngeschwindigkeit bis zu einer vorbestimmten Drehzahl (V₁) zu reduzieren, die in einem Intervall zwischen dem Mindestschwellenwert (Sₘᵢₙ) und 10 % über dem Mindestschwellenwert (Sₘᵢₙ) liegt, indem die Pulsweitenmodulation geändert wird, dann den Elektromotor (3) in einer vorbestimmten Position zu stoppen, indem die Zweige (B1, B2, B3) des Wechselrichters (1) kurzgeschlossen werden, wenn die vorbestimmte Position erreicht ist.

7. Getriebemotor (10) nach Anspruch 6, bei dem die vorbestimmte Position durch eine Stoppsensor (13) gegeben wird, der einer Stoppposition der Wischervorrichtung (11) zugeordnet ist, wobei die Steuerungseinheit (18) dazu ausgestaltet ist, ein Ausgangssignal des Stoppsensors (13) zu verwenden, so dass der Zeitpunkt bestimmt wird, von dem an die Drehzahl des Rotors reduziert werden muss.

8. Getriebemotor (10) nach Anspruch 7, bei dem der Stoppsensor (13) geändert wird, um eine Verzögerungsposition auszugeben, von der an die Drehzahl des Elektromotors (3) reduziert werden muss, um das Stoppen der Wischervorrichtung (11) an der Stoppposition zu ermöglichen.

9. Getriebemotor (10) nach Anspruch 7 oder 8, bei dem die Steuerungseinheit (17) dazu ausgestaltet ist, die Position des Wischerarms aus der Position des Rotors, die durch die elektromotorischen Kräfte bestimmt wird, und dem Untersetzungsverhältnis des Getriebes herzuleiten, wenn die Drehzahl des Rotors größer als der Mindestschwellenwert (Sₘᵢₙ) ist.

10. Wischervorrichtung (11), insbesondere für ein Kraftfahrzeug, umfassend einen Getriebemotor (10) nach einem der Ansprüche 6 bis 9.

## Claims

1. A method for controlling a brushless and sensorless DC electric motor (3) for motor vehicle equipment, wherein the electric motor (3) comprises a rotor and phases (A, B, C) supplied with power by pulse width modulation applied to an inverter (1) for supplying power to the electric motor (3) and wherein, beyond a minimum threshold (Sₘᵢₙ) for the rotational speed of the rotor, the position of the rotor is determined from a measurement of electromotive forces at the phases (A, B, C) of the electric motor (3),
**characterized in that**, in the event of a command (104) to stop the electric motor (3), the rotational speed of the rotor is reduced (105) from a nominal speed to a predetermined rotational speed (V₁) within an interval between the minimum threshold (Sₘᵢₙ) and 10% above said minimum threshold (Sₘᵢₙ) by modifying the pulse width modulation, and then the electric motor (3) is stopped (106) in a predetermined position by short-circuiting the branches (A, B, C) of the inverter (1) when the predetermined position is reached.

2. The control method as claimed in claim 1, wherein the reduction (104) of the rotational speed of the rotor to the predetermined rotational speed (V₁) comprises a plurality of increments associated with various reductions of the rotational speed of the electric motor (3).

3. The control method as claimed in claim 1 or 2, wherein the electric motor (3) is associated with a gear reduction device so as to form a geared motor (10) configured so as to drive a motor vehicle wiper device (11) comprising at least one wiper arm, said wiper device (11) comprising a stop sensor (13) associated with a stop position of the wiper arm, and wherein the predetermined position is given by the stop sensor (13), and an output signal from the stop sensor (13) is used to determine the time from which the rotational speed of the rotor should be reduced.

4. The control method as claimed in claim 3, wherein the stop sensor (13) is modified so as to provide a deceleration position from which the rotational speed of the electric motor (3) should be reduced in order to allow the wiper device (11) to be stopped in the stop position, for example 5° or 10° before the stop position.

5. The control method as claimed in claim 3 or 4, wherein the position of the wiper arm is deduced from the position of the rotor determined by the electromotive forces and from the gear reduction ratio of the gear reducer when the rotational speed of the rotor is greater than the minimum threshold (Sₘᵢₙ).

6. A geared motor (10) for driving a motor vehicle wiper device (11) comprising a gear reduction device and a brushless and sensorless DC electric motor (3), wherein the electric motor (3) comprises a rotor, a control unit (18) and phases (A, B, C) supplied with power by pulse width modulation applied to an inverter (1) of the electric motor (3), and wherein the control unit (18) is configured so as to determine the position of the rotor from a measurement of electromotive forces at the phases (A, B, C) of the electric motor (3) beyond a minimum threshold (Sₘᵢₙ) for the rotational speed of the rotor, **characterized in that**, in the event of a command to stop the electric motor (3), the control unit (18) is configured so as to reduce the rotational speed of the rotor from a nominal speed to a predetermined rotational speed (V₁) within an interval between the minimum threshold (Sₘᵢₙ) and 10% above said minimum threshold (Sₘᵢₙ) by modifying the pulse width modulation, and then to stop the electric motor (3) in a predetermined position by short-circuiting the branches (B1, B2, B3) of the inverter (1) when the predetermined position is reached.

7. The geared motor (10) as claimed in claim 6, wherein the predetermined position is given by a stop sensor (13) associated with a stop position of the wiper device (11), the control unit (18) being configured so as to use an output signal from said stop sensor (13) so as to determine the time from which the rotational speed of the rotor should be reduced.

8. The geared motor (10) as claimed in claim 7, wherein the stop sensor (13) is modified so as to provide a deceleration position from which the rotational speed of the electric motor (3) should be reduced in order to allow the wiper device (11) to be stopped in the stop position.

9. The geared motor (10) as claimed in claim 7 or 8, wherein the control unit (18) is configured so as to deduce the position of the wiper arm from the position of the rotor determined by the electromotive forces and from the gear reduction ratio of the gear reduction device when the rotational speed of the rotor is greater than the minimum threshold (Sₘᵢₙ).

10. A wiper device (11), in particular for a motor vehicle, comprising a geared motor (10) as claimed in one of claims 6 to 9.
